# FASCICULE DE BREVET EUROPEEN

(11) **EP 0 827 776 B1**
(45) Date de publication et mention de la délivrance du brevet: **19.03.2003**
(21) Numéro de dépôt: 97201991.3
(22) Date de dépôt: 01.07.1997
(51) Int. Cl.: B01J 19/02, C01D 1/04, B65D 25/34

(54) **Utilisation d'un récipient en tôle en acier zingué pour le conditionnement de soude caustique solide**
Verwendung eines Behälters aus zinkplattiertem Blech in einem Verfahren zum Konditionieren von festes Ätznatron
Use of a zinc plated steel container in a process for the conditioning of solid caustic soda

(30) Priorité: 18.07.1996 BE 9600651
(43) Date de publication de la demande: 11.03.1998
(73) Titulaire: SOLVAY (Société Anonyme), 1050 Bruxelles (BE)
(72) Inventeur: Servais, Michel, 1950 Kraainem (BE)
(74) Mandataire: Dufrasne, Eugène

(56) Documents cités:
- DE-C- 379 095
- DE-U- 8 700 059
- US-A- 2 637 441
- PATENT ABSTRACTS OF JAPAN vol. 16, no. 234 (C-0945), 29 mai 1992 & JP 04 048096 A (NIPPON STEEL CORP.), 18 février 1992, & DATABASE WPI Section Ch, Week 9213 Derwent Publications Ltd., London, GB; Class M11, AN 92-102588 & JP 04 048 096 (NIPPON STEEL CORP.)
- DATABASE WPI Section Ch, Week 8012 Derwent Publications Ltd., London, GB; Class A82, AN 80-21391c XP002029185 & JP 55 020 446 (MITSUI MINING & SMELTING CO. & SANKIN TOKUSHUTORYO) , 13 février 1980 & JP 55 020 446 A (MITSUI MINING & SMELTING CO.) 13 février 1980
- PATENT ABSTRACTS OF JAPAN vol. 10, no. 148 (C-350), 29 mai 1986 & JP 61 006260 A (SHIN NIPPON SEITETSU K.K.), 11 janvier 1986, & DATABASE WPI Section Ch, Week 8608 Derwent Publications Ltd., London, GB; Class M13, AN 86-052422 & JP 61 006 260 (NIPPON STEEL CORP.)
- DATABASE WPI Week 9221 Derwent Publications Ltd., London, GB; AN 92-170444 XP002029186 & JP 04 101 838 (NIPPON CARBIDE KOGYO K.K.) , 3 avril 1992 & PATENT ABSTRACTS OF JAPAN vol. 16, no. 339 (M-1284), 22 juillet 1992 & JP 04 101838 A (NIPPON CARBIDE IND. CO. INC.), 3 avril 1992,

## Description

La présente invention concerne le conditionnement de produits chimiques.

La soude caustique est généralement produite sur le marché à l'état de solutions aqueuses d'hydroxyde de sodium ou à l'état d'une masse solide contenant généralement plus de 95 % en poids d'hydroxyde de sodium.

Le conditionnement de la soude caustique solide est habituellement réalisé dans des tonneaux ou fûts métalliques (SOLVAY & Cie, Soude caustique, brochure Br. 832a B/5/458, pages 13 à 16). Les fûts utilisés pour le conditionnement de la soude caustique sont généralement réalisés en tôles en acier ordinaire, non allié, l'acier ordinaire présentant la propriété d'être sensiblement inerte vis-à-vis de la soude caustique.

Les fûts en acier ordinaire utilisés pour le conditionnement de la soude caustique solide présentent toutefois la propriété désavantageuse de se corroder rapidement lorsqu'ils sont soumis aux intempéries, ce qui impose de les stocker dans des hangards couverts (Ibidem, page 23).

L'invention concerne dès lors l'utilisation pour le conditionnement de soude caustique solide d'un récipient comprenant une paroi formée d'une tôle en acier, qui se caractérise par le fait que la tôle est zinguée sur sa face qui est extérieure au récipient, à l'exclusion de sa face qui est intérieure au récipient.

Selon l'invention, la tôle en acier peut être obtenue par tout moyen métallurgique adéquat, par exemple par laminage. Son épaisseur n'est pas critique et va dépendre de la forme et des dimensions du récipient, ainsi que de sa destination. A titre d'exemple, des tôles de quelques dizièmes de mm conviennent dans le cas de récipients destinés au conditionnement commercial de soude caustique solide.

Conformément à l'invention, la tôle en acier est zinguée sur une seule face, qui est celle située à l'extérieur du récipient. La face de la tôle qui est située à l'intérieur dudit récipient (et qui est dès lors destinée à être en contact avec le contenu du récipient) n'est pas zinguée.

Le zingage de la tôle en acier peut être obtenu par tout moyen métallurgique adéquat, par exemple par galvanisation ou par électrozingage. On utilise avantageusement une tôle galvanisée.

La forme et les dimensions du récipient utilisé selon l'invention ne sont pas critiques. Selon une forme de réalisation intéressante de l'invention, le récipient consiste en un tonneau ou fût cylindrique. Selon l'invention, la tôle précitée constitue la paroi latérale du fût, celui-ci étant obturé par deux couvercles métalliques circulaires. Chaque couvercle est de préférence formé d'un disque en acier (par exemple en acier ordinaire, non allié) qui est zingué sur sa face extérieure au fût, à l'exclusion de sa face intérieure au fût, qui est nue.

Dans une autre forme de réalisation particulière selon l'invention, la tôle est en acier ordinaire, non allié et sa face qui est intérieure au récipient est nue.

On entend désigner par acier ordinaire, non allié, un alliage de fer et de carbone défini par le diagramme Fe-C (A. DE SY et J. VIDTS - Traité de Métallurgie structurale théorique et appliquée - N.I.C.I. et DUNOD - 1962-pages 233 à 242). Outre du fer et du carbone, l'acier ordinaire contient habituellement des impuretés provenant des matières premières utilisées ou des procédés métallurgiques utilisés. Parmi ces impuretés figurent le silicium, le manganèse et le phosphore, ainsi que, dans une moindre mesure, le soufre, l'aluminium et l'azote. En règle générale, ces impuretés sont à l'état de traces, par exemple en quantités pondérales n'excédant pas 0,5 % de silicium, 1,8 % de manganèse et 0,05 % de phosphore.

Par ailleurs, par définition, une face de la tôle est dite nue lorsqu'elle est dépourvue de revêtement, à l'exception, éventuellement, d'une couche d'oxyde de fer formée par oxydation naturelle de l'acier au contact de l'air atmosphérique.

Dans cette forme de réalisation selon l'invention, la tôle est par exemple en acier doux ou extra-doux.

La forme de réalisation du récipient utilisé selon l'invention, qui vient d'être décrite, trouve une application intéressante pour le conditionnement de soude caustique solide. Dans cette application, le récipient utilisé selon l'invention présente en effet la particularité avantageuse d'être inerte à la fois vis-à-vis du produit qu'il contient (la soude caustique) et des agents atmosphériques, ce qui supprime la nécessité d'un abri pour un stockage de longue durée.

L'invention concerne l'utilisation du récipient selon l'invention, défini plus haut, pour le conditionnement de soude caustique solide.

Par définition, la soude caustique solide contient plus de 90 % (habituellement plus de 95 %) en poids d'hydroxyde de sodium. La soude caustique solide du commerce contient habituellement de 98 à 99,5 % en poids d'hydroxyde de sodium. Elle peut contenir plus de 99,5 % (voire même 100 %) en poids d'hydroxyde de sodium.

Dans l'utilisation selon l'invention, le récipient est avantageusement en acier ordinaire, non allié.

Comme exposé plus haut, l'invention simplifie le conditionnement de la soude caustique solide, en supprimant la nécessité d'un stockage des fûts d'acier à l'abri des intempéries.

L'invention a dès lors également pour objet un procédé pour le conditionnement de soude caustique solide telle que définie plus haut, selon lequel on fond la soude caustique et on déverse la soude caustique fondue dans un récipient conforme à l'invention.

Des particularités et détails de l'invention vont apparaître au cours de la description suivante des dessins annexés, qui représentent une forme de réalisation préférée du récipient selon l'invention.

La figure 1 représente, en section axiale verticale, un fût métallique conforme à l'invention.

La figure 2 montre, à très grande échelle, un détail de la figure 1.

Dans ces figures, des mêmes numéros de référence désignent des éléments identiques.

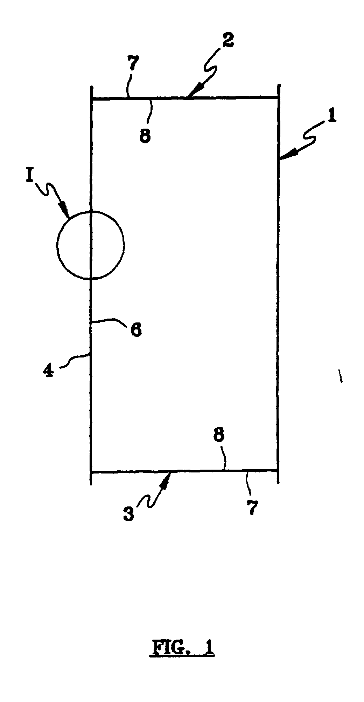

Le fût représenté à la figure 1 est destiné à contenir de la soude caustique solide. Il comprend une paroi cylindrique latérale désignée, de manière générale, par la notation de référence 1, et deux couvercles 2 et 3. La paroi cylindrique 1 est formée d'une tôle laminée en acier ordinaire et les couvercles 2 et 3 sont des disques en acier ordinaire laminés, sertis sur la tôle 1. Des détails concernant l'assemblage de la tôle 1 et des couvercles sertis 2 et 3 sont accessibles dans l'ouvrage Techniques de l'Ingénieur, A 9760 - 2 - 1995, 2.2, pages 7 à 9.

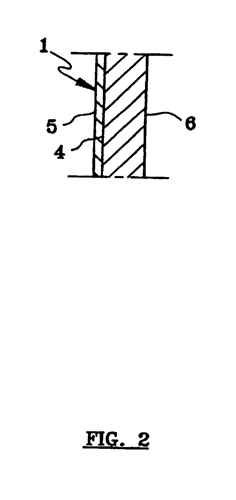

La figure 2 montre, à très grande échelle, un détail de la tôle 1, désigné par la notation 1 à la figure 1.

Conformément à l'invention, la tôle 1 porte, sur sa face 4, qui est extérieure au fût, un revêtement protecteur 5, obtenu par un procédé de galvanisation ou par électrozingage, tandis que sur sa face 6, qui se trouve à l'intérieur du fût, la tôle 1 est en acier nu. De manière similaire, les couvercles 2 et 3 portent, sur leur face 7,qui est extérieur au fût, un revêtement protecteur obtenu par un procédé de galvanisation ou par électrozingage, tandis que leur face 8, qui se trouve à l'intérieur du fût, est en acier nu.

Le fût représenté aux figures 1 et 2 est destiné au conditionnement de soude caustique solide. Dans cette application, on utilise un fût tel que représenté aux figures, mais démuni du couvercle 2. On chauffe la soude caustique à une température supérieure à son point de fusion (318,4 °C) pour la fondre, on déverse la soude caustique liquide ainsi obtenue dans le récipient (de préférence jusqu'à ce que le récipient soit complètement rempli), puis on la laisse se refroidir naturellement jusqu'à la température ambiante pour qu'elle se solidifie dans le récipient. Après avoir versé la soude caustique fondue dans le fût ou après le refoidissement et la solidification de celle-ci, on applique le couvercle 2 sur le fût et on le fixe à la tôle 1 par sertissage.

## Revendications

1. Utilisation pour le conditionnement de soude caustique solide d'un récipient comprenant une paroi formée d'une tôle en acier, **caractérisé en ce que** la tôle est zinguée sur sa face qui est extérieure au récipient, à l'exclusion de sa face qui est intérieure au récipient, qui est nue.

2. Utilisation selon la revendication 1, **caractérisée en ce que** la tôle est une tôle laminée en acier ordinaire.

3. Utilisation selon la revendication 1 ou 2, **caractérisée en ce que** la tôle zinguée est une tôle galvanisée.

4. Utilisation selon l'une quelconque des revendications 1 à 3, **caractérisée en ce que** le récipient consiste en un fût cylindrique.

5. Utilisation selon l'une quelconque des revendications précédentes, dans laquelle la soude caustique solide comprend de 98 à 99,5 % en poids d'hydroxyde de sodium.

## Claims

1. Use, for the packaging of solid caustic soda, of a container having a wall formed from a steel sheet, **characterized in that** the sheet is zinc-plated on its side facing the outside of the container, to the exclusion of its side facing the inside of the container, which is bare.

2. Use according to Claim 1, **characterized in that** the sheet is a rolled sheet of carbon steel.

3. Use according to Claim 1 or 2, **characterized in that** the zinc-plated sheet is a galvanized sheet.

4. Use according to any one of Claims 1 to 3, **characterized in that** the container consists of a cylindrical drum.

5. Use according to any one of the preceding claims, in which the solid caustic soda comprises from 98 to 99.5% by weight of sodium hydroxide.

## Patentansprüche

1. Verwendung eines Behälters, der eine aus Stahlblech gebildete Wand aufweist, zum Konditionieren von festem Ätznatron, **dadurch gekennzeichnet, daß** das Blech auf seiner die Außenseite des Behälters bildenden Seite verzinkt ist, unter Ausschluß seiner Seite, die die Innenseite des Behälters bildet, die nackt ist.

2. Verwendung nach Anspruch 1, **dadurch gekennzeichnet, daß** das Blech ein gewalztes Blech aus gewöhnlichem Stahl ist.

3. Verwendung nach Anspruch 1 oder 2, **dadurch gekennzeichnet, daß** das verzinkte Blech ein galvanisiertes Blech ist.

4. Verwendung nach einem der Ansprüche 1 bis 3, **dadurch gekennzeichnet, daß** der Behälter aus einem zylindrischen Faß besteht.

5. Verwendung nach einem der vorstehenden Ansprüche, worin das feste Ätznatron 98 bis 99,5 Gew.-% an Natriumhydroxid umfaßt.
